# DEMANDE DE BREVET EUROPEEN

(11) **EP 2 110 747 A1**
(43) Date de publication de la demande: **21.10.2009**
(21) Numéro de dépôt: 08300182.6
(22) Date de dépôt: 17.04.2008
(51) Int. Cl.: G06F 11/14

(54) **Procédé de sauvegarde et de restauration de fichiers informatiques**

(71) Demandeur: ASP64, 64210 Bidart (FR)
(72) Inventeur: Martin, Guy, 40300, LABATUT (FR)
(74) Mandataire: Fantin, Laurent

(57) **Abrégé**

L'objet de l'invention est un procédé de sauvegarde et de restauration, notamment dans le cadre de la mise en place d'un suivi de production ou d'un contrôle qualité dans un centre de production, de fichiers informatiques enregistrés par des moyens de gestion dans des moyens de stockage de sauvegarde, **caractérisé en ce qu**'il consiste, lors de toute sauvegarde Si à l'instant Ti, à :
- créer, grâce aux moyens de gestion des fichiers informatiques, un fichier de restauration Ri répertoriant les versions des fichiers (A j, Bj, Cj, ...) à l'instant Ti,
- comparer, grâce aux moyens de gestion des fichiers informatiques, le fichier de restauration Ri répertoriant les versions des fichiers (Aj, Bj, Cj, ...) à l'instant Ti avec le fichier le fichier de restauration Ri-1 répertoriant les versions des fichiers (Aj, Bj, Cj, ...) à l'instant Ti-1 afin d'identifier les fichiers informatiques dans une nouvelle version depuis la précédente sauvegarde Si-1,
- enregistrer pour la sauvegarde Si ledit fichier de restauration Ri et les fichiers informatiques (Aj, Bj, Cj, ... ) identifiés dans une nouvelle version dans les moyens de stockage des sauvegardes.

## Description

La présente invention est relative à un procédé de sauvegarde et de restauration de fichiers informatiques permettant d'augmenter les performances et la fiabilité des opérations de gestion de données, notamment dans le cadre d'un suivi de cycles de production ou d'un contrôle qualité de produits.

Lors de la mise en place dans un centre de production de moyens informatiques de suivi de production ou de contrôle qualité des produits, les indices et les différents relevés nécessaires à l'analyse et à la présentation de résultats sont tirés de données rassemblées puis recoupées à partir de différents fichiers informatiques.

Ainsi, un fichier informatique peut contenir des données relatives à différents produits sur une même unité de production ou à un même produit sur différentes unités de production, la répartition desdites données entre les différents fichiers informatiques dépendant du type d'organisation de production souhaitée. En raison des flux variables entre produits et entre unités, lesdites données sont susceptibles de changer à des dates et à des fréquences différentes.

Chaque modification d'une donnée dans un fichier informatique entraîne l'enregistrement d'une nouvelle version de ce fichier informatique.

Ainsi, une nouvelle version d'un fichier informatique est créée à chaque nouvelle acquisition automatique de données ou à chaque nouvel enregistrement de données effectué par une personne travaillant sur un ou plusieurs fichiers informatiques.

Pour limiter les pertes de données, les moyens informatiques de suivi de production ou de contrôle qualité des produits comprennent des moyens pour sauvegarder et restaurer les données contenues dans les fichiers informatiques. Ainsi, un procédé de sauvegarde est généralement déclenché automatiquement, de manière périodique ou selon un calendrier pré-établi, mais il peut aussi, en complément, être lancé manuellement par un utilisateur.

Un procédé idéal de sauvegarde et de restauration doit permettre de créer et d'enregistrer une image des fichiers informatiques après chaque modification des données qu'ils contiennent, mais surtout, ledit procédé doit permettre après une restauration de recréer un ensemble cohérent de fichiers informatiques. Selon l'art antérieur, il existe aujourd'hui trois grands types de procédés de sauvegarde et de restauration :
- les procédés à sauvegarde totale : ils consistent à enregistrer la totalité des fichiers à chaque sauvegarde,
- les procédés à sauvegarde différentielle : ils consistent à enregistrer les fichiers qui ont changé depuis la dernière sauvegarde totale,
- les procédés à sauvegarde incrémentale : ils consistent à enregistrer les fichiers modifiés depuis la dernière sauvegarde et uniquement ceux-ci.

Bien entendu, plus la fréquence des sauvegardes augmente, plus la perte de données est réduite.

Dans le cas d'un centre de production et pour les besoins d'un suivi de production ou d'un contrôle qualité de produit, les moyens informatiques permettent l'acquisition de nombreuses données relatives aux produits ou aux unités de production et les modifications desdits fichiers informatiques sont très fréquentes.

Dans le cas de l'utilisation d'un procédé à sauvegarde totale, une image de tous les fichiers informatiques est enregistrée à chaque sauvegarde, ce qui a l'avantage de pouvoir assurer quasiment à coup sûr la cohérence entre les fichiers informatiques lors d'une restauration. Cependant, dans le cas d'un suivi de production ou d'un contrôle qualité de produit, un procédé à sauvegarde totale doit traiter une grande quantité de fichiers, ce qui entraîne de longs transferts et nécessite de grandes capacités de stockage ou la gestion de plusieurs médias de sauvegarde.

Dans le cas d'un procédé à sauvegarde différentielle, une image totale de tous les fichiers est d'abord enregistrée, puis, à chaque sauvegarde, seulement une image des fichiers ayant été modifiés par rapport à la dernière image totale est enregistrée. Un procédé à sauvegarde différentielle permet donc de limiter la quantité de fichiers transférés et la capacité de stockage nécessaire. Toutefois, dans le cas d'un suivi de production ou d'un contrôle qualité de produit, et étant donné la grande fréquence d'acquisition des données et donc de modifications des fichiers, les quantités de fichiers à transférer ont tendance a augmenter très rapidement dès que les sauvegardes s'éloignent de la dernière image totale créée.

En conclusion, sur un plan technique, l'application d'une sauvegarde totale ou différentielle à un suivi de production ou à un contrôle qualité de produit est aujourd'hui difficilement réalisable.

En effet, en très peu de temps, soit la quantité de fichiers à gérer par les moyens informatiques surpasserait leur capacité de stockage soit il y aurait nécessité de supprimer au fur et à mesure les fichiers les plus anciens.

De plus, si l'on se place dans le cas d'une sauvegarde externalisée, contrairement à une sauvegarde locale, il est clair que la quantité de fichiers à transférer entre les moyens informatiques locaux et les moyens informatiques distants de stockage doit être minimisée.

Un procédé à sauvegarde incrémentale s'impose donc comme la meilleure solution dans le cas de la mise en place d'un suivi de production ou d'un contrôle qualité de produits dans un centre de production, ce procédé n'enregistrant qu'une image des fichiers modifiés, c'est-à-dire présents dans une nouvelle version, depuis la précédente sauvegarde. Toutefois, dans le cas d'une application dudit procédé pour la mise en place d'un suivi de production ou d'un contrôle qualité des produits, les différences de fréquences de modification des fichiers posent des problèmes de cohérence entre les versions des différents fichiers lors d'une restauration, et empêchent jusqu'à aujourd'hui, l'utilisation d'un procédé à sauvegarde incrémentale.

C'est un objet de la présente invention de répondre aux inconvénients des procédés de l'art antérieur en proposant un procédé de sauvegarde et de restauration de fichiers informatiques, notamment pour le suivi de production ou le contrôle qualité de produits dans un centre de production, utilisant une sauvegarde de type incrémentale afin de diminuer la quantité de fichiers transférés et stockés à chaque sauvegarde par les moyens informatiques.

Selon un autre objectif, ce procédé doit permettre de restaurer des fichiers cohérents malgré les différences de fréquences de modifications des fichiers de manière à assurer une continuité de fonctionnement du système de production.

A cet effet, l'invention a pour objet un procédé de sauvegarde et de restauration, notamment dans le cadre de la mise en place d'un suivi de production ou d'un contrôle qualité dans un centre de production, de fichiers informatiques enregistrés par des moyens de gestion dans des moyens de stockage de sauvegarde, **caractérisé en ce qu**'il consiste, lors de toute sauvegarde Si à l'instant Ti, à :
- créer, grâce aux moyens de gestion des fichiers informatiques, un fichier de restauration Ri répertoriant les versions des fichiers (Aj, Bj, Cj, ...) à l'instant Ti,
- comparer, grâce aux moyens de gestion des fichiers informatiques, le fichier de restauration Ri répertoriant les versions des fichiers (Aj, Bj, Cj, ...) à l'instant Ti avec le fichier de restauration Ri-1 répertoriant les versions des fichiers (Aj, Bj, Cj, ... ) à l'instant Ti-1 afin d'identifier les fichiers informatiques dans une nouvelle version depuis la précédente sauvegarde Si-1,
- enregistrer pour la sauvegarde Si ledit fichier de restauration Ri et les fichiers informatiques (Aj, Bj, Cj, ... ) identifiés dans une nouvelle version dans les moyens de stockage des sauvegardes.

D'autres caractéristiques et avantages ressortiront de la description qui va suivre de l'invention, description donnée à titre d'exemple uniquement, en regard des dessins annexés sur lesquels :
- la figure 1 représente schématiquement la circulation des données et des fichiers informatiques dans un centre de production équipé de moyens informatiques pour la mise en oeuvre d'un suivi de production ou d'un contrôle qualité de produits utilisant le procédé de sauvegarde et de restauration selon l'invention,
- la figure 2 est un diagramme représentant les changements de versions des fichiers informatiques au fil des sauvegardes générées par la mise en oeuvre d'un suivi de production ou d'un contrôle qualité de produits utilisant le procédé de sauvegarde et de restauration selon l'invention,
- la figure 3 représente une table répertoriant les changements de versions des fichiers informatiques au fil des sauvegardes générées par la mise en oeuvre d'un suivi de production ou d'un contrôle qualité de produits utilisant le procédé de sauvegarde et de restauration selon l'invention.

Le procédé de sauvegarde et de restauration selon l'invention est décrit pour la mise en oeuvre d'un suivi de production ou d'un contrôle qualité de produits dans un centre de production.

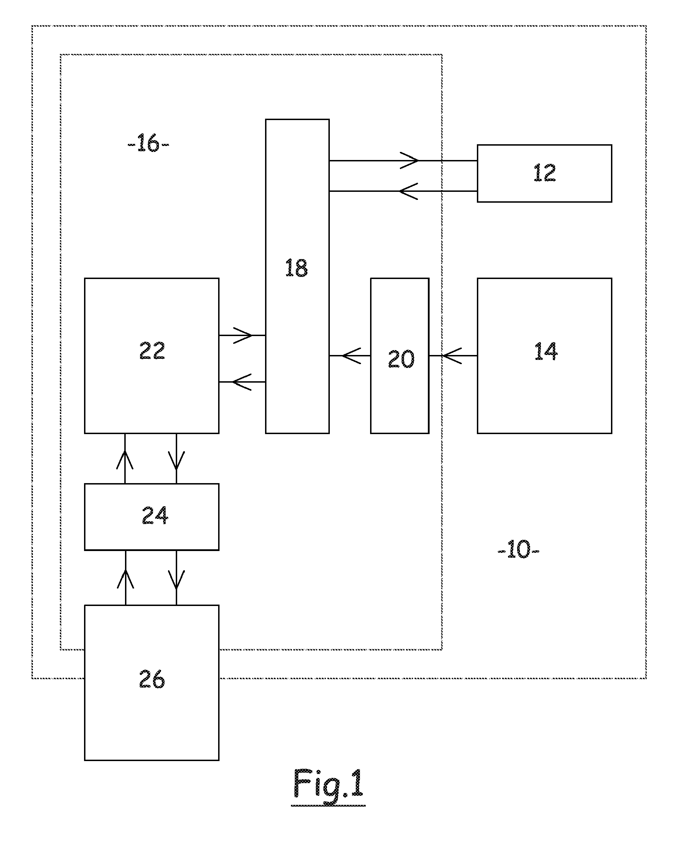

Comme l'illustre la figure 1, un centre de production 10 comprend des moyens de production 12 : postes de production, machines-outils, robots, chaînes d'assemblage, ... , des moyens d'acquisition 14 de données relatives aux produits tels que capteurs, sondes, ordinateurs, ... , et des moyens informatiques 16 pour la mise en oeuvre d'un suivi de production ou d'un contrôle qualité de produits dans ledit centre de production 10. Les données relatives aux produits transmises par les moyens d'acquisition 14 et/ou les moyens de production 12 sont diverses et variées, il peut s'agir, pour donner des exemples, d'informations concernant le nombre de pièces usinées au niveau d'un poste de production, l'avancement d'une opération, le nombre de pièces stockées ou mises au rebut durant un certain temps sur un ou plusieurs postes de production, ainsi que toute autre information susceptible d'être intégrée dans un suivi de production ou un contrôle qualité de produits.

Suivant le type d'industries dans lequel ledit suivi ou ledit contrôle doit être mis en place, ces données sont susceptibles d'être modifiées fréquemment.

Aussi, les moyens informatiques 16 comprennent des moyens de traitement 18 des données :
- renvoyées par les moyens d'acquisition 14 via une interface 20 permettant d'adapter le signal transmis par lesdits moyens d'acquisition 14, et/ou,
- renvoyées directement par les moyens de production 12.

Bien entendu, les moyens de traitement 18 peuvent aussi transmettre des données aux moyens de production 12, comme par exemple des données relatives à la gamme de fabrication ou au contrat de phase d'un produit, ou au déclenchement d'une sécurité.

Toutes ces données issues des moyens d'acquisition 14 et des moyens de production 12 sont mises sous la forme de fichiers informatiques au fur et à mesure de leur apparition ou de leur modification, lesdits fichiers informatiques étant enregistrés dans des moyens de stockage 22 par lesdits moyens de traitement 18.

Selon l'invention, un fichier informatique contient une ou plusieurs données relatives à un ou plusieurs produits ou un ou plusieurs postes de production.

De plus, par fichier informatique, l'invention entend un fichier ou un ensemble de fichiers informatiques contenus dans un même répertoire.

Pour chaque acquisition d'une nouvelle donnée ou pour chaque modification ou suppression d'une donnée contenue dans un fichier informatique, une nouvelle version du fichier informatique est enregistrée par les moyens de traitement 18 dans les moyens de stockage 22, la nouvelle version écrasant la précédente. Dans le cadre de la mise en place d'un suivi de production ou d'un contrôle qualité de produits, on doit pouvoir analyser ou contrôler l'évolution des données renvoyées par les moyens de production 12 et/ou les moyens d'acquisition 14 pour faire apparaître les erreurs dans la gestion de production, comme au niveau des flux de production par exemple, ou pour isoler un poste de production ou une machine présentant des défaillances, comme par exemple un grand nombre de pièces mises au rebut.

Intégré à un suivi de production ou à un contrôle qualité de produits, le procédé de sauvegarde et de restauration selon l'invention permet de suivre précisément les évolutions des différentes données afin de pouvoir corriger les erreurs dans le suivi de production et d'améliorer la qualité des produits.

En effet, le procédé de sauvegarde et de restauration permet d'effectuer des sauvegardes des fichiers informatiques au fur et à mesure de leurs modifications, et des restaurations desdits fichiers sous forme d'un ensemble cohérent.

Il est important de noter qu'il est nécessaire d'obtenir un ensemble cohérent de fichiers lors d'une restauration, les données contenues dans un premier fichier informatique étant susceptible de dépendre de données contenues dans un deuxième fichier informatique.

Pour la mise en oeuvre du procédé de sauvegarde et de restauration selon l'invention, les moyens informatiques 16 du centre de production 10 comprennent des moyens de gestion 24 des fichiers informatiques enregistrés dans les moyens de stockage 22, et des moyens de stockage 26 des sauvegardes.

Les moyens de stockage 26 des sauvegardes consistent en au moins un média, interne aux moyens informatiques 16 ou externe dans le cas d'une sauvegarde externalisée par un réseau par exemple, relié aux moyens de gestion 24 des fichiers informatiques.

Ces moyens de stockage 26 peuvent prendre différentes formes connues de l'homme du métier : supports électroniques tels que mémoire flash ou autre, moyens électromagnétiques tels que bande ou disque dur, et supports numériques tels que CD et DVD, et dont le choix ne revêt pas d'importance particulière dans la présente invention.

Ainsi, le procédé de sauvegarde et de restauration selon l'invention consiste à :
- créer à un instant donné Ti une sauvegarde Si avec les moyens de gestion 24 des fichiers informatiques,
- enregistrer ladite sauvegarde Si dans les moyens de stockage 26 des sauvegardes.

Par sauvegarde Si, l'invention entend un ensemble de fichiers informatiques comprenant un fichier de restauration Ri généré par lesdits moyens de gestion 24 et éventuellement un ou plusieurs fichiers informatiques (Aj, Bj, Cj, ...) présents dans les moyens de stockage 22 à l'instant Ti, i étant un indice s'incrémentant à chaque nouvelle sauvegarde, et j étant un indice s'incrémentant à chaque nouvelle version d'un fichier informatique (Aj, Bj, Cj, ...) présent dans les moyens de stockage 22.

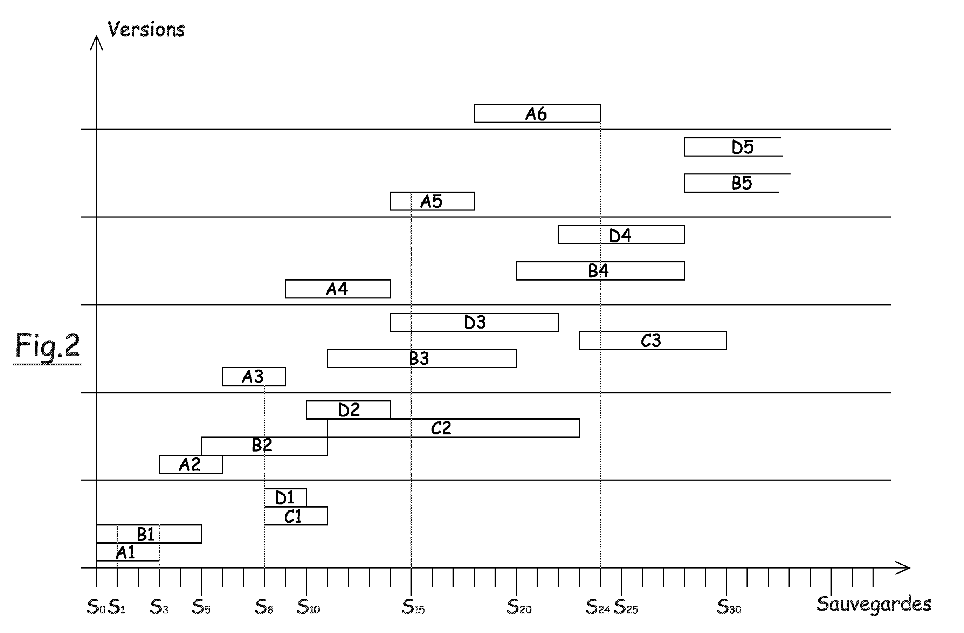

L'évolution des versions des fichiers informatiques (Aj, Bj, Cj, ...) au fur et à mesure des sauvegardes effectuées par les moyens de gestion 24 est illustrée sur un diagramme en figure 2.

Le procédé constitue donc une base de sauvegardes (S0, S1, S2, S3, ..., Si, ... ) dans les moyens de stockage 26 des sauvegardes. Ladite base de sauvegardes (S0, S1, S2, S3, ..., Si, ... ) consiste en une image de l'évolution des versions des fichiers informatiques (Aj, Bj, Cj, ...) au fur et à mesure des sauvegardes effectuées par les moyens de gestion 24.

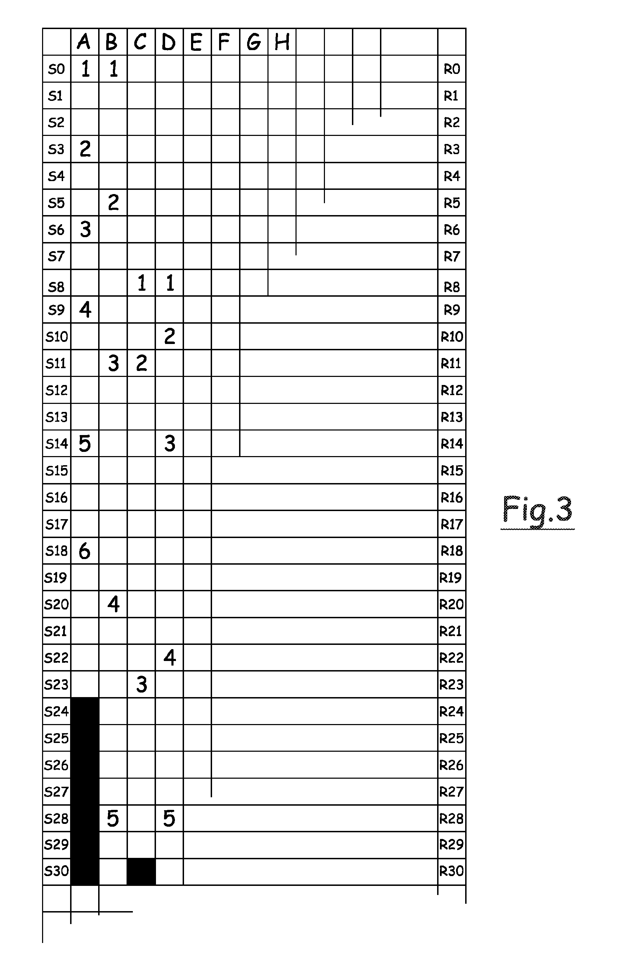

Cette base de sauvegardes (S0, S1, S2, S3, ..., Si, ... ) est représentée sous forme matricielle en figure 3.

Le fichier de restauration Ri consiste en une liste des versions de chaque fichier informatique (Aj, Bj, Cj, ...) à l'instant Ti, la suppression d'un fichier informatique à l'instant Ti étant aussi répertoriée. Ce fichier de restauration Ri créé par les moyens de gestion 24 permet de compléter la ligne correspondant à la sauvegarde Si dans la matrice de la base de sauvegardes (S0, S1, S2, S3, ..., Si, ...).

Avantageusement, le fichier de restauration Ri contient le nombre total de fichiers et éventuellement d'autres informations relatives aux fichiers qu'il répertorie, comme son emplacement dans les moyens de stockage 26 des sauvegardes, son origine (moyens d'acquisition 14 ou moyens de production 12), son auteur...

Le procédé de sauvegarde et de restauration selon l'invention consiste, lors de toute nouvelle sauvegarde Si ultérieure à la sauvegarde initiale S0, à :
- créer, grâce aux moyens de gestion 24 des fichiers informatiques, le fichier de restauration Ri répertoriant les versions des fichiers (Aj, Bj, Cj, ...) à l'instant Ti,
- comparer, grâce aux moyens de gestion 24 des fichiers informatiques, le fichier de restauration Ri répertoriant les versions des fichiers (Aj, Bj, Cj, ...) à l'instant Ti avec le fichier le fichier de restauration Ri-1 répertoriant les versions des fichiers (Aj, Bj, Cj, ... ) à l'instant Ti-1 afin d'identifier les fichiers informatiques dans une nouvelle version depuis la précédente sauvegarde Si-1,
- enregistrer ledit fichier de restauration Ri et les fichiers informatiques (Aj, Bj, Cj, ... ) identifiés dans une nouvelle version dans les moyens de stockage 26 des sauvegardes.

Il apparaît clairement que vis-à-vis des procédés de l'art antérieur, le procédé selon l'invention permet effectivement de limiter les transferts des fichiers informatiques vers les moyens de stockage lors de chaque sauvegarde : seuls les fichiers ayant été modifiés sont transférés.

Cette réduction des données transférées réclame des moyens techniques moindres, et donc moins coûteux, pour le transfert et le stockage des sauvegardes par rapport aux procédés de l'art antérieur.

D'autre part, dans le cadre d'un suivi de production ou d'un contrôle qualité, cette réduction des données transférées autorise des sauvegardes plus fréquentes et/ou l'acquisition d'un plus grand nombre de données, ce qui assure un meilleur suivi ou un contrôle plus précis.

Cependant, l'augmentation de la fréquence des sauvegardes et la multiplication des données traitées ne sont pas industriellement exploitables si la restauration des fichiers (Aj, Bj, Cj, ... ) d'une ou plusieurs sauvegardes Si n'est pas effectuée de manière stricte et rigoureuse.

Le procédé de sauvegarde et de restauration selon la présente invention permet, grâce au fichier de restauration Ri créé lors de chaque sauvegarde et à la base de sauvegardes (S0, S1, S2, S3, ..., Si, ... ) ainsi construite, une restauration d'une sauvegarde Si sous forme d'un ensemble cohérent de fichiers informatiques dans leur versions à l'instant Ti.

En effet, pour restaurer les fichiers à un instant Tr antérieur, le procédé de sauvegarde et de restauration selon l'invention prévoit de :
- lire, grâce aux moyens de gestion 24, le fichier de restauration Ri enregistré dans la base de sauvegardes (S0, S1, S2, S3, ..., Si, ... ) lors de la sauvegarde Si effectuée à l'instant Ti précédant immédiatement l'instant Tr,
- extraire des moyens de stockage 26, grâce aux moyens de gestion 24, les versions des fichiers informatiques à l'instant Ti enregistrées dans les moyens de stockage 26,
- si la sauvegarde Si ne contient pas tous les fichiers, extraire des moyens de stockage 26, grâce aux moyens de gestion 24, les fichiers manquants dans la sauvegarde Si-1 effectuée à l'instant Ti-1,
- si les sauvegardes Si et Si-1 ne contiennent pas tous les fichiers, extraire des moyens de stockage 26, grâce aux moyens de gestion 24, les fichiers manquants dans la sauvegarde Si-2 effectuée à l'instant Ti-2,
- continuer ainsi de suite jusqu'à la restauration de tous les fichiers.

Si on cherche à retrouver l'ensemble de fichiers cohérents de l'instant Tr, le procédé de restauration consiste, pour chaque fichier, à extraire des moyens de stockage 26, grâce aux moyens de gestion 24, le fichier le plus récent à compter de l'instant Tr dans les différentes sauvegardes.

Le procédé de sauvegarde et de restauration selon l'invention va maintenant être décrit à travers des exemples détaillés et en regard des figures 2 et 3.

Ainsi, dans l'exemple représenté, lors du lancement du suivi de production ou du contrôle qualité utilisant le procédé de sauvegarde et de restauration selon l'invention, la sauvegarde initiale S0 effectuée à l'instant T0 par les moyens de gestion 24 comprend les fichiers informatiques A1 et B1 et le fichier de restauration R0 consiste en une liste répertoriant les versions de fichiers A1 et B1.

Par la suite, lors de la première sauvegarde S1 à l'instant T1, les moyens de gestion 24 créent le fichier de restauration R1 et le comparent au fichier R0 : les fichiers informatiques n'ayant pas changé de version, seul le fichier de restauration R1 est stocké dans les moyens de stockage 26 des sauvegardes pour compléter la matrice de la base de sauvegardes,

Lors de la sauvegarde S3, la comparaison entre le fichier de restauration R3 et le fichier de restauration R2 indique que le fichier A1 a été modifié et se trouve désormais dans sa version A2, par conséquent, les moyens de gestion 24 enregistrent pour la sauvegarde S3 ledit fichier de restauration R3 et le fichier A2 dans les moyens de stockage 26.

Lors de la sauvegarde S8, la comparaison du fichier R8 avec le fichier R7 indique deux nouveaux fichiers C1 et D1 dans les moyens de stockage 22 et le non changement de version des fichiers B2 et A3 depuis la sauvegarde S7, par conséquent, pour la sauvegarde S8, les fichiers D1 et C1 sont enregistrés dans les moyens de stockage 26 avec le fichier de restauration R8.

Lors de la sauvegarde S24, la comparaison de R24 avec R23 indique le non changement de version des fichiers C3, B4 et D4 et la suppression du fichier A6, seul le fichier de restauration R24 répertoriant le fichier A6 supprimé et le non changement de version des fichiers C3, B4 et D4 est enregistré dans les moyens de stockage 26.

Enfin, comme dernier exemple, lors de la restauration des fichiers à l'instant Tr précédé immédiatement de l'instant T15, les moyens de gestion 24 lisent dans la base de sauvegardes (S0, S1, S2, S3, ..., Si, ... ) le fichier de restauration R15 créé lors de la sauvegarde S15, les moyens de gestion 24 constatent alors que la sauvegarde S15 ne contient aucun fichier à l'exception du fichier de restauration R15. Les moyens de gestion 24 vont alors analyser la sauvegarde antérieure S14, et vont extraire les fichiers A5 et D3. Les fichiers B et C manquants, les moyens de gestion 24 vont analyser successivement les sauvegardes et vont extraire de la sauvegarde la plus proche, à savoir la sauvegarde S11 les fichiers B3 et C2. L'ensemble des fichiers ayant été restauré, la procédure de restauration est terminée. Ainsi, les moyens de gestion 24 vont reconstituer un ensemble cohérent de fichiers A5, B3, C2 et D3 ayant tous fonctionné ensemble. Même s'il est décrit pour la mise en oeuvre d'un suivi de production ou d'un contrôle qualité de produits dans un centre de production, le présent procédé de sauvegarde et de restauration peut être appliqué dans tout domaine où il est nécessaire de sauvegarder et de pouvoir restaurer un ensemble cohérent de fichiers informatiques contenant des données susceptibles d'être modifiées fréquemment.

## Revendications

1. Procédé de sauvegarde et de restauration, notamment dans le cadre de la mise en place d'un suivi de production ou d'un contrôle qualité dans un centre de production, de fichiers informatiques enregistrés par des moyens de gestion (24) dans des moyens de stockage (26) de sauvegarde, **caractérisé en ce qu'**il consiste, lors de toute sauvegarde Si à l'instant Ti, à :
- créer, grâce aux moyens de gestion 24 des fichiers informatiques, un fichier de restauration Ri répertoriant les versions des fichiers (Aj, Bj, Cj, ...) à l'instant Ti,
- comparer, grâce aux moyens de gestion (24) des fichiers informatiques, le fichier de restauration Ri répertoriant les versions des fichiers (Aj, Bj, Cj, ...) à l'instant Ti avec le fichier le fichier de restauration Ri-1 répertoriant les versions des fichiers (Aj, Bj, Cj, ... ) à l'instant Ti-1 afin d'identifier les fichiers informatiques dans une nouvelle version depuis la précédente sauvegarde Si-1,
- enregistrer pour la sauvegarde Si ledit fichier de restauration Ri et les fichiers informatiques (Aj, Bj, Cj, ... ) identifiés dans une nouvelle version dans les moyens de stockage (26) des sauvegardes.

2. Procédé de sauvegarde et de restauration, notamment dans le cadre de la mise en place d'un suivi de production ou d'un contrôle qualité dans un centre de production, de fichiers informatiques selon la revendication 1, **caractérisé en ce que** pour restaurer les fichiers à un instant Tr antérieur, le procédé de sauvegarde et de restauration consiste à :
- lire, grâce aux moyens de gestion (24), le fichier de restauration Ri enregistré dans la sauvegarde Si effectuée à l'instant Ti précédant immédiatement l'instant Tr,
- extraire des moyens de stockage (26), grâce aux moyens de gestion (24), les versions des fichiers informatiques à l'instant Ti enregistrées dans la sauvegarde Si,
- si la sauvegarde Si ne contient pas tous les fichiers, extraire des moyens de stockage (26), grâce aux moyens de gestion (24), les fichiers manquants dans la sauvegarde Si-1 effectuée à l'instant Ti-1,
- si les sauvegardes Si et Si-1 ne contiennent pas tous les fichiers, extraire des moyens de stockage (26), grâce aux moyens de gestion (24), les fichiers manquants dans la sauvegarde Si-2 effectuée à l'instant Ti-2,
- continuer ainsi de suite jusqu'à la restauration de tous les fichiers.

3. Procédé de sauvegarde et de restauration, notamment dans le cadre de la mise en place d'un suivi de production ou d'un contrôle qualité dans un centre de production, de fichiers informatiques selon la revendication 1 ou 2, **caractérisé en ce que** le fichier de restauration Ri contient des informations relatives aux emplacements des fichiers (Aj, Bj, Cj, ... ) qu'il répertorie dans les moyens de stockage (26) des sauvegardes.
